# NEUE EUROPÄISCHE PATENTSCHRIFT

(11) **EP 0 676 622 B2**
(45) Veröffentlichungstag und Bekanntmachung des Hinweises auf die Entscheidung über den Einspruch: **26.09.2001**
(45) Hinweis auf die Patenterteilung: 16.09.1998
(21) Anmeldenummer: 95105099.6
(22) Anmeldetag: 05.04.1995
(51) Int. Cl.: G01D 5/20, G01B 7/30, G01B 7/00, G01D 5/249

(54) **Positionssensor**
Position sensor
Capteur de position

(30) Priorität: 06.04.1994 DE 4411759
(43) Veröffentlichungstag der Anmeldung: 11.10.1995
(73) Patentinhaber: DaimlerChrysler AG, 70567 Stuttgart (DE)
(72) Erfinder: Güttler, Herbert Dr.rer.nat., D-70567 Stuttgart (DE); Bauer, Karin Dr.rer.nat., D-81479 München (DE)
(74) Vertreter: Fröhling, Werner Otto, Dr.

(56) Entgegenhaltungen:
- EP-A- 0 388 584
- EP-B- 0 182 085
- DE-A- 2 524 975
- DE-A- 4 205 957
- FR-E- 87 847
- GB-A- 2 008 256
- US-A- 4 170 754
- PATENT ABSTRACTS OF JAPAN vol. 8 no. 68 (P-264) ,30.März 1984 & JP-A-58 215508 (KAWAGUCHIKO SEIMITSU KK) 15.Dezember 1983,

## Beschreibung

Die Erfindung bezieht sich auf einen Positionssensor nach dem Oberbegriff des Patentanspruchs 1.

Grundsätzlich sind Verfahren zur Registrierung magnetischer Markierungen unter Verwendung von Spulen bekannt. Dazu werden z. B. drahtgewickelte Spulen verwendet. So sind beispielsweise Verfahren bekannt, die unter Verwendung mehrerer Spulen einen dazwischen eingebrachten Träger (Skalenscheibe) vermessen, auf dem die magnetischen Markierungen angebracht sind. Auch Anordnungen, die mit nur einer Spule Induktivitätsänderungen anzeigen, gehören zum Stand der Technik. Nachteilig bei allen vorhergenannten Meßvorrichtungen und -verfahren ist, daß sie oft nur eine schwache Ortsauflösung der zu registrierenden Magnetfelder zulassen und schwierig zu handhaben sind. Dies ist in der Geometrie der Meßanordnungen und den verwendeten Bauteilen begründet. Die verwendeten Meßverfahren beispielsweise lassen oft nur Temperaturen von max. 150 °C zu, da schon unterhalb der Curie-Temperatur die Magnetisierung mit der Zeit schwächer wird.

Aus DE-A-25 24 975 ist eine Einrichtung zum Orten und zur Lagebestimmung von elektrisch leitfähigen Körpern mittels eines hochfrequenten elektromagnetischen Feldes offenbart. Zwei auf Isolierkörper gewickelte Drahtspulen sind als Sende- und Empfängerspulen in einem Meßkopf parallelachsig nebeneinander oder parallelachsig hintereinander angeordnet. Bei Annäherung an einen elektrisch leitenden Körper wird das von der Sendespule in die Empfängerspule induzierte Signal verändert. Die Einrichtung ist zur Abstandsbestimmung oder in speziellen Ausbildungen zur Dickenbestimmung elektrisch leitender Schichten vorgesehen. Die Einrichtung ist jedoch nur in einem begrenzten Temperaturbereich zwischen -20°C und +50°C einsetzbar und nur zur Bestimmung von Strukturen mit einer minimalen Dimension von etwa 0,5 mm geeignet.

In FR-A-87 847 ist eine Anordnung offenbart, mit der durch eine Induktionsanordnung von Sende- und Empfängerspulen ein magnetischer Maßstab bestehend aus magnetischen Zähnen abgetastet wird. Die Anordnung ist wie die Anordnung aus DE-A-25 24 975 nur für relativ grobe Abmessungen geeignet. Wegen des magnetischen Maßstabs ist der Einsatz bei erhöhten Temperaturen stark eingeschränkt.

Aus der Buchveröffentlichung- "Die numerische Steuerung von Werkzeugmaschinen" von Dr.-Ing. Wilhelm Simon, Carl Hanser Verlag München, 1963, S. 113 bis 115, ist ein magnetischer Sensor als Wegmeßsystem bekannt. Dieses Meßsystem beruht auf einem induktiven Differentialabtaster, welcher als Dreischenkelmagnet ausgebildet ist. In die Primärspule auf dem mittleren Schenkel wird eine Wechselspannung eingespeist, welche bei symmetrischer Stellung von ferromagnetischen Meßklötzchen infolge der gegensinnigen Schaltung der Sekundärwicklungen keine Spannung abgibt.

Ein Positionssensor mit den Merkmalen des ersten Teils des Anspruchs 1 ist aus EP-B-0 182 085 bekannt.

Mit diesem System sind Wegunterschiede in der Größenordnung von 2 bis 5 um feststellbar. Der Nachteil dieser Meßmethode besteht darin, daß die Abstände derferromagnetischen Meßklötzchen von dem Differentialtransformator ebenfalls unterhalb von 5 µm liegen müssen. Ein so geringer Abstand ist jedoch nur mittels eines mechanisch präzise geführten Vorschubs der als Marken dienenden Meßklötzchen zu realisieren.

Der Erfindung liegt die Aufgabe zugrunde, eine Meßanordnung zu schaffen, die einfach in der Anwendung ist und gleichzeitig eine hohe Auflösung der zu vermessenden Strecken oder Winkel zuläßt; weiter wird gefordert, daß die Meßanordnung in staubhaltiger Umgebung und Temperaturen auch oberhalb von 100 °C zuverlässig arbeitet.

Diese Aufgabe wird gemäß der Erfindung durch die im Patentanspruch 1 aufgeführten Merkmale gelöst. Weiterbildungen der Erfindung sind in den abhängigen Patentansprüchen angegeben.

Besondere Vorteile der Erfindung werden dadurch erreicht, daß eine Meßvorrichtung geschaffen wird, die das Mehrspulenverfahren aufgreift und die Spulen in Schichten auf einem Substrat aufbaut. Die Spulenschichten werden mittels der Photolithographietechnik auf einem Träger erzeugt.

In einer bevorzugten Ausführung werden die Spulen paarweise übereinander als Sende- und Empfängerspule ausgebildet. In einer weiteren bevorzugten Ausführung werden die beiden Spulen als konzentrische Spiralen auf dem Substrat angeordnet. Mit diesen Meßanordnungen und -vorrichtungen können magnetische Markierungen einfach und mit hoher Auflösung detektiert werden. Die Markierungen können sich durch magnetische und/oder elektrische Eigenschaften, wie z. B. Permeabilität oder Leitfähigkeit, vom Trägermaterial unterscheiden.

Die Erfindung wird im folgenden anhand bevorzugter Ausführungsbeispiele beschrieben. Insbesondere stützt sich die Beschreibung auf Abbildungen bevorzugter Ausführungsbeispiele, die erläuternden Charakter haben.

Nun folgt eine Beschreibung der erfindungsgemäßen Ausführungsbeispiele in Verbindung mit den Abbildungen.

Es zeigen:
- Fig. 1: den Antriebsmechanismus der Skalenscheibe eines Ausführungsbeispiels,
- Fig. 2: eine bevorzugte Ausführungsform der Skalenscheibe;
- Fig. 3: eine bevorzugte Meßanordnung im Schnitt;
- Fig. 4: die schematische Darstellung der elektronischen Auswerteschaltung;
- Fig. 5: eine bevorzugte Ausführung einer Detektoranordnung;
- Fig. 6: eine Detaildarstellung der Spulen im Schnitt und
- Fig. 7: eine mehrlagige Spule in Draufsicht.

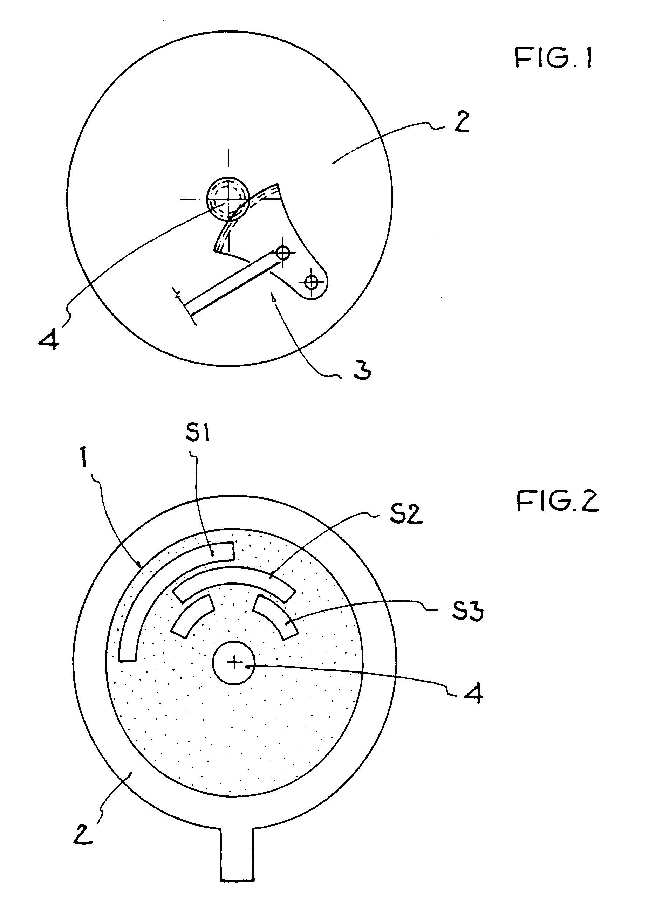

Üblicherweise wird eine Drehbewegung dadurch detektiert, daß eine Codierscheibe 1 gegenüber einem ortsfesten Detektorträger 2 angetrieben wird (s. Fig. 1 und 2). Der Antriebsmechanismus 3 wandelt über ein Zahnsegment und ein Zahnrad eine lineare Bewegung in eine Drehbewegung um. Es kann aber ebensogut auch eine lineare Skalenbewegung detektiert werden.

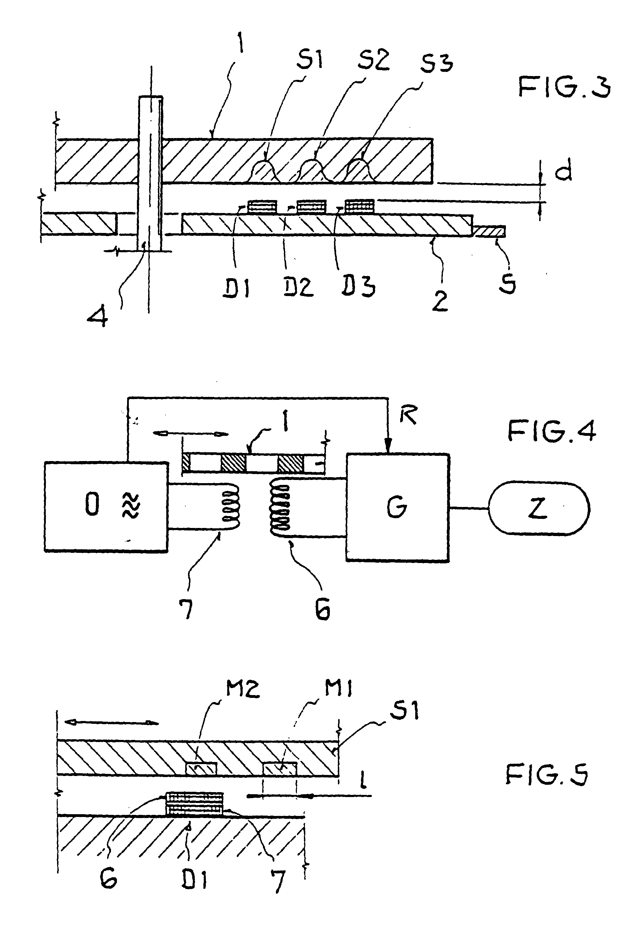

Es liegt eine Detektorvorrichtung und -anordnung vor, in der zwei Spulen auf einem Träger aufgebracht und relativ zu einer mit Markierungen versehenen Skalenscheibe bewegbar sind. Figur 3 zeigt den prinzipiellen Aufbau eines bevorzugten Ausführungsbeispiels. Wie zu ersehen, besteht der feststehende Teil der Anordnung aus einem Träger 2 und den Spulenanordnungen D1, D2 und D3. Diesem gegenübergestellt befindet sich eine Skalenscheibe 1 mit Markierungen auf Spuren S1 bis S3. Der Träger 2 besteht aus einer Scheibe, auf welche eine Siliziumscheibe aufgekittet ist. Auf dieser Siliziumscheibe befinden sich die vorzugsweise mit einer Maskentechnik hergestellten Spulenanordnungen D1, D2 und D3. Gemäß einem bevorzugten Ausführungsbeispiel befinden sich die Spulen 6 und 7 als Schichten auf dem Träger 2.

Sendespule 7 und Empfangsspule 6 bestehen aus leitenden Materialien, wie sie üblicherweise aus der Halbleiter-, Supraleiter- oder Elektrotechnik für photolithographische Verfahren in Verbindung mit Aufdampfen, Sputtern u. ä. bekannt sind.

Die Spulenmaterialien werden nach ihren elektrischen und verfahrenstechnischen Eigenschaften ausgewählt und können u. a. reine Metalle, Supraleiter oder Halbleiter umfassen.

Die Spulen werden mit Hilfe der Photolithographietechnik erzeugt. Man stellt die Schichtdicke der Spulen auf unter 100 µm, vorzugsweise unter 30 µm, vorzugsweise auf etwa 1 µm ein. Durch das beschriebene Produktionsverfahren ist eine außergewöhnlich geringe Schwankung in den Schichtdicken möglich. Das wiederum ermöglicht es, daß die Proben sehr nahe an die Meßanordnung herangebracht werden können.

Es besteht ein weiterer Vorteil darin, daß der so aufgebauten, hochempfindlichen Detektoranordnung die zu detektierende Struktur problemlos an der dem Träger 1 gegenüberliegenden Seite angeordnet werden kann. Dies ist besonders dann der Fall, wenn die zu detektierenden Strukturen auf einem ebenen Träger aufgebracht sind, welcher sich als Skalen- bzw. Codierscheibe gegenüber der Spulenanordnung bewegt.

Bei der Messung kann davon ausgegangen werden, daß jede Meßspule annähernd den gleichen Abstand vom Meßobjekt aufweist. Der Abstand der Doppelspule von der Codierscheibe ist dabei von gleicher Größenordnung wie der Abstand der Marken auf der Skalenscheibe.

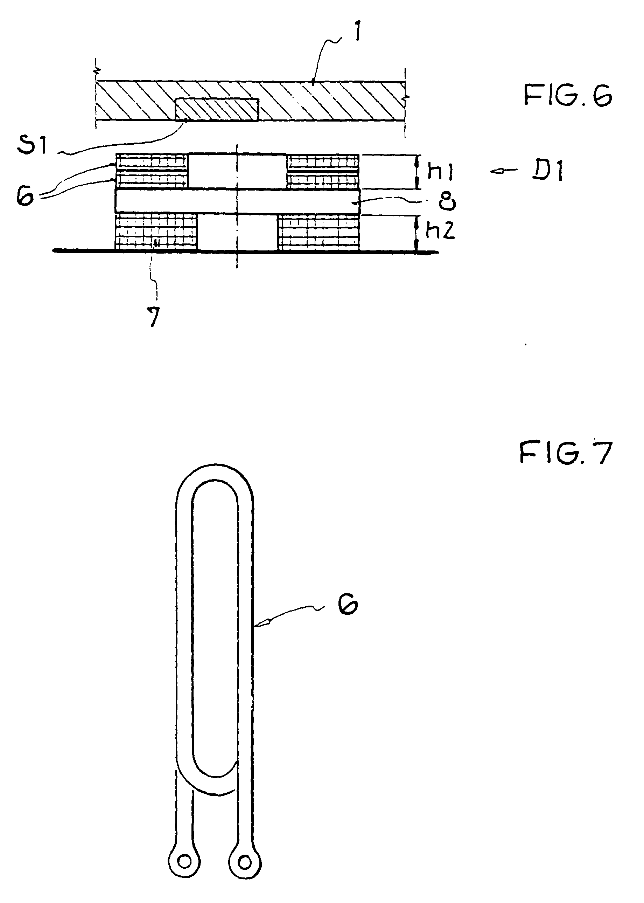

Ein weiterer Vorteil der Meßanordnungen liegt darin, daß keine umständlichen Justiervorgänge nötig sind. Mit der Produktion ist die räumliche Beziehung der Spulenpaare 6, 7 zueinandersowie der verschiedenen Spulenpaare untereinander und zu den Markierungen M1 und M2 auf der Spur S1 (s. Fig. 3 und 5) festgelegt. Damit ist nur eine einmalige Kalibrierung nötig, da die Bauteile in ihren geometrischen Beziehungen festliegen.

Die beschriebenen Meßanordnungen lassen auf extrem einfache Weise außerordentlich exakte und hochauflösende Messungen zu. Die Dimensionierung der Spulen läßt sich stark variieren und die einzelnen Spulenpaare können, wie in Fig. 6 gezeigt, dicht gepackt werden. Je nach gewünschter Empfindlichkeit und Ortsauflösung können die Spulen in ihrer Dimensionierung und der Anzahl ihrer Windungen gewählt werden. Die einzelnen Spulen oder Spulenpaare können einschichtig oder mehrschichtig aufgebaut sein. Der mehrschichtige Aufbau ist insbesondere dann vorteilhaft, wenn die Anzahl der Windungen erhöht werden soll ohne die geometrischen Abmessungen zu vergrößern.

Es wurden in Experimenten verschiedene Dimensionierungen erprobt. Bei Versuchen mit einer Ortsauflösung von 0,5 bis 5 mm Abstand der Codemarken hatten die Spulen eine Breite von etwa 0,2 bis 2,5 mm und wiesen einen Abstand von ca. 0,2 bis 2,5 mm gegeneinander auf. Die Breite der Leiterbahnen der Spulen variierte von 30 bis 100 µm.

Für die Messungen wurde ein "Lock-in"-Verstärker mit beispielsweise 100 kHz nach Fig. 4 verwendet. In den Versuchen wurden Ergebnisse erzielt, die eine weitere Steigerung der Ortsauflösung bei einer Verminderung der Größe von Sende- und Empfangsspule erwarten läßt.

Bei einer bevorzugten Ausführungsform sind die in Fig. 3 im Schnitt dargestellten Spuren S1, S2 und S3 auf einer beweglichen Scheibe 1 als leitfähige Spuren nach Fig. 2 so angeordnet, daß die Winkelstellung der Codierscheibe 1 nach dem Graycode absolut festgestellt werden kann. Durch Vermehrung der Spuren kann die Winkelauflösung beliebig gesteigert werden. Außerdem kann eine Spur mit festen Marken vorgesehen sein, welche eine inkrementale Messung ermöglicht. Die leitfähigen Spuren bewirken unterhalb der Sendespule 7, daß die in der leitfähigen Schicht induzierten Ströme nach der Lenzschen Regel das erzeugende Wechselfeld schwächen. Daher wird in der Empfängerspule 6 ein schwächeres Signal beobachtet, wenn sich diese Spule über einer leitfähigen Stelle der Spur befindet. Nach Fig. 4 wird das vom Oszillator O erzeugte Signal einerseits der Sendespule 7 zugeführt, andererseits auch einem phasenempfindlichen Gleichrichter G als Signal R.

Dieser Gleichrichter fungiert außerdem als sogenannter Lock-in-Verstärker, welcher über einen Diskriminator einen Zähler oder eine Anzeige Z versorgt, welche auch die Decodierung der Spuren vornimmt. Jedesmal wenn eine Detektorspule ein Signal erzeugt, welches unterhalb einer vorgegebenen Schwellenspannung liegt, wird eine logische 0 erzeugt, jedesmal wenn das Signal diese Schwelle überschreitet, wird auf der zugehörigen Spur eine logische 1 angezeigt.

Es wird eine Ausführung bevorzugt, die keinerlei ferro- oder ferrimagnetische Materialien enthält. Das vermindert die Gefahr, daß sich aufgrund der Anziehung magnetisierbarer Partikel aus der Umgebung die Empfindlichkeit verringert.

Statt Leitfähigkeitsunterschieden können die Doppelspulen D1, D2 und D3 auch auf Unterschiede in der Permeabilität ansprechen. Die Spuren S1, S2 und S3 nach Fig. 2 können auch ferromagnetische Materialien aufweisen, welche in ein paramagnetisches Grundmaterial eingebettet sind. Wesentlich ist, daß die Werte für µ_{R} die relative Permeabilität sich möglichst stark unterscheiden. Das Material mit der höheren Permeabilität erzeugt in der Detektorspule eine höhere magnetische Feldstärke und damit eine höhere induzierte Spannung. Durch das Verfahren der Photolithographie können leicht Spulen mit mehr als 10 Windungen hergestellt und die Empfindlichkeit bei rel. niedriger Bauhöhe weiter gesteigert werden.

Der Positionssensor wird vorzugsweise in den Fällen eingesetzt, wo hohe Verschmutzungsgrade und hohe Temperaturen den Einsatz herkömmlicher Detektorsysteme mit permanent magnetischen Markierungen unmöglich machen. Beispielsweise ist bei Anwendung von optischen Auslesevorrichtungen vorausgesetzt, daß die umgebende Atmosphäre bestimmten Reinheitserfordernissen genügt. Im Kraftfahrzeug beispielsweise treten im Motorraum sowohl höhere Temperaturen auf, als auch größere Mengen von Staub und Feuchtigkeit, welche zur Verschmutzung von Teilen führen, die dieser Atmosphäre ausgesetzt sind. Beispielsweise ist ein Sensor für die Stellung des Gaspedals oder der Drosselklappe mit optischen Mitteln ungünstig, da er einen hohen Aufwand für eine staubdichte Kapselung erfordert.

Falls man die Lagerung der Codierscheibe sorgfältig ausführt, sind Abstände zwischen Detektorspule und Codierspur von unter 50 µm möglich. Falls die Breite der Detektorspule ebenfalls unter 50 µm gewählt wird, sind Wegauflösungen von ca. 10 µm möglich. Damit können auch Winkel in der Größenordnung von 1° und weniger detektiert werden.

Durch Verminderung des Abstandes zwischen den Spulen und der Skalenscheibe läßt sich die Auflösung steigern, insbesondere wenn die Höhen h1 und h2 der Spulen, sowie die Stärke der Isolierschicht 8 genügend klein sind, was durch photolithographische Methoden ohne weiteres erreichbar ist.

In einer weiteren vorteilhaften Ausführung ist sowohl die Sendespule 7 als auch die Empfängerspule 6 mit einem magnetisierbaren Material gefüllt. Auf diese Weise kann eine weitere Steigerung der Ortsauflösung erreicht werden.

## Patentansprüche

1. Positionssensor mit einem Detektor mit Sende- und Empfangsspule zur Erfassung von ein elektromagnetisches Feld beeinflussenden Markierungen, wobei:
die Sendespule (7) ein hochfrequentes Wechselfeld erzeugt, und die Empfangsspule (6) das durch die Markierungen gestörte elektromagnetische Feld empfängt,
die Windungen der Sende- und Empfangsspule (6, 7) mit parallelen Achsen in jeweils einer Ebene und in Schichten auf einem Träger (2) angeordnet sind,
die Markierungen (M1, M2, S1, S2, S3) auf einer in einer parallelen Ebene zu Sende- und Empfangsspule (6, 7) angeordneten Skalenscheibe (1) zur Bestimmung der Stellung der Skalenscheibe (1) angeordnet sind,
die Skalenscheibe (1) der Sende- und Empfangsspule (6, 7) fest zugeordnet und dabei ihr gegenüber drehbar oder linear verschiebbar ist,
**dadurch gekennzeichnet,**
**daß** der Träger (2) aus einer Scheibe besteht, auf welcher eine Siliziumscheibe aufgekittet ist, auf der sich die mit Hilfe der Photolithographie hergestellte Sende- und Empfangsspule (6,7) befinden.

2. Positionssensor nach Anspruch 1,
**dadurch gekennzeichnet,**
**daß** die Skalenscheibe (1) eine isolierende Schicht mit darin eingebetteten leitfähigen Markierungen (M1, M2) aufweist.

3. Positionssensor nach Anspruch 1,
**dadurch gekennzeichnet,**
**daß** die Skalenscheibe (1) eine permanentmagnetische Schicht mit Löchern aufweist.

4. Positionssensor nach Anspruch 1,
**dadurch gekennzeichnet,**
**daß** die Skalenscheibe (1) Abschnitte unterschiedlicher Permeabilität aufweist.

5. Positionssensor nach irgendeinem der vorangegangenen Ansprüche,
**dadurch gekennzeichnet,**
**daß** die Skalenscheibe (1) Markierungen auf verschiedenen Spuren (S1, S2, S3) aufweist, und daß Spuren vorhanden sind, welche eine Lageinformation nach dem Graycode enthalten.

6. Positionssensor nach irgendeinem der vorangegangenen Ansprüche,
**gekennzeichnet durch**
einen Detektor (D1) welcher zwei mit Hilfe der Maskentechnik hergestellte Spulen, namlich die Sendespule (7) und die Empfangsspule (6), aufweist.

7. Positionssensor nach irgendeinem der vorangegangenen Ansprüche,
**dadurch gekennzeichnet,**
**daß** die Abstände der Empfangsspule (6) von der Sendespule (7) und der Empfangsspule (6) von der Oberfläche der Skalenscheibe (1) 10 bis 100 µm betragen.

8. Positionssensor nach irgendeinem der vorangegangenen Ansprüche,
**dadurch gekennzeichnet,**
**daß** die Sendespule (7) und Empfangsspule (6) übereinander angeordnet sind und daß ihre gemeinsame Achse auf der Skalenscheibe (1) senkrecht steht.

9. Positionssensor nach irgendeinem der vorangegangenen Ansprüche 1 bis 7,
**dadurch gekennzeichnet,**
**daß** die Sendespule (7) und die Empfangsspule (6) übereinander angeordnet sind und daß in einem mittleren Bereich ein magnetisierbares Material angeordnet ist.

10. Positionssensor nach irgendeinem der vorangegangenen Ansprüche,
**dadurch gekennzeichnet,**
**daß** die Breite der Empfangsspule (6) und der Sendespule (7) 20 bis 30 µm beträgt.

11. Positionssensor nach irgendeinem der vorangegangenen Ansprüche,
**dadurch gekennzeichnet,**
**daß** der Positionssensor zum Nachweis von linearen Skalenbewegungen ausgebildet ist.

## Claims

1. Position sensor comprising a detector with transmitting and receiving coils for detection of markings influencing an electromagnetic field, wherein the transmitting coil (7) produces a high-frequency alternating field and the receiving coil (6) receives the electromagnetic field disturbed by the markings, the windings of the transmitting and receiving coils (6, 7) are arranged with parallel axes each time in a respective plane and in layers on a support (2), the markings (M1, M2, S1, S2, S3) are arranged on a scale disc (1), which is arranged in a plane parallel to the transmitting and receiving coils (6, 7), and are for the determination of the setting of the scale disc (1), and the scale disc (1) is fixedly associated with the transmitting and receiving coils (6, 7) and in that case is rotatable or linearly displaceable relative thereto, **characterised in that** the support (2) consists of a disc, onto which a silicon slice is cemented, on which the transmitting and receiving coils (6, 7) are disposed with the aid of photolithography.

2. Position sensor according to claim 1, **characterised** thereby that the scale disc (1) has an insulating layer with conductive markings (M1, M2) embedded therein.

3. Position sensor according to claim 1, **characterised** thereby that the scale disc (1) has a permanently magnetic layer with apertures.

4. Position sensor according to claim 1, **characterised** thereby that the scale disc (1) has sections of different permeability.

5. Position sensor according to any one of the preceding claims, **characterised** thereby that the scale disc (1) has markings on different tracks (S1, S2, S3) and that tracks are present which contain a positional information according to the Gray code.

6. Position sensor according to any one of the preceding claims, **characterised by** a detector (D1) which has two coils, namely the transmitting coil (7) and the receiving coil (6), produced with the aid of the mask technique.

7. Position sensor according to any one of the preceding claims, **characterised** thereby that the spacings of the receiving coil (6) from the transmitting coil (7) and of the receiving coil (6) from the surface of the scale disc (1) amounts to 10 to 100 micrometres.

8. Position sensor according to any one of the preceding claims, **characterised** thereby that the transmitting coil (7) and the receiving coil (6) are arranged one above the other and that their common axis extends vertically on the scale disc (1).

9. Position sensor according to any one of the preceding claims 1 to 7, characterising thereby that the transmitting coil (7) and the receiving coil (6) are arranged one above the other and that a magnetisable material is arranged in a centre region.

10. Position sensor according to any one of the preceding claims, **characterised** thereby that the width of the receiving coil (6) and the transmitting coil (7) amounts to 20 to 30 micrometres.

11. Position sensor according to any one of the preceding claims, **characterised** thereby that the position sensor is constructed for detection of linear scale movements.

## Revendications

1. Capteur de position équipé d'un détecteur comportant une bobine d'émission et une bobine de réception en vue de la détection de repères influençant un champ électromagnétique, la bobine d'émission (7) générant un champ alternatif à haute fréquence, et la bobine de réception (6) recevant le champ électromagnétique perturbé par les repères, dans lequel :
les enroulements des bobines d'émission et de réception (6, 7) sont disposés avec leurs axes parallèles dans respectivement un plan et selon des couches sur un support (2),
les repères (M1, M2, S1, S2, S3) sont disposés sur un disque gradué (1) placé dans un plan parallèle aux bobines d'émission et de réception (6, 7) en vue de la détermination de la position du disque gradué (1), le disque gradué (1) est associé de façon fixe aux bobines d'émission et de réception (6, 7) et peut tourner ou être déplacé linéairement par rapport à celles-ci,
**caractérisé en ce que** le support (2) se compose d'un disque sur lequel est collé un disque de silicium, sur lequel se trouvent les bobines d'émission et de réception (6, 7) réalisées par photolithographie.

2. Capteur de position selon la revendication 1, **caractérisé en ce que** le disque gradué (1) comporte une couche isolante avec des repères conducteurs (M1, M2) noyés à l'intérieur.

3. Capteur de position selon la revendication 1, **caractérisé en ce que** le disque gradué (1) comporte une couche magnétique permanente présentant des trous.

4. Capteur de position selon la revendication 1, **caractérisé en ce que** le disque gradué (1) présente des tronçons de perméabilité différente.

5. Capteur de position selon l'une quelconque des revendications précédentes, **caractérisé en ce que** le disque gradué (1) présente des repères sur différentes pistes (S1, S2, S3), et en ce que des pistes existent qui contiennent une information de position selon le code Gray.

6. Capteur de position selon l'une quelconque des revendications précédentes, **caractérisé par** un détecteur (D1) qui comporte deux bobines réalisées selon le procédé de masquage, à savoir la bobine d'émission (7) et la bobine de réception (6).

7. Capteur de position selon l'une quelconque des revendications précédentes, **caractérisé en ce que** les espacements de la bobine de réception (6) de la bobine d'émission (7) et de la bobine de réception (6) de la surface du disque gradué (1) sont compris entre 10 et 100 µm.

8. Capteur de position selon l'une quelconque des revendications précédentes, **caractérisé en ce que** la bobine d'émission (7) et la bobine de réception (6) sont superposées et en ce que leur axe commun est perpendiculaire au disque gradué (1).

9. Capteur de position selon l'une quelconque des revendications précédentes 1 à 7, **caractérisé en ce que** la bobine d'émission (7) et la bobine de réception (6) sont superposées et en ce que dans une région centrale est disposé un matériau magnétisable.

10. Capteur de position selon l'une quelconque des revendications précédentes 1 à 7, **caractérisé en ce que** les bobines d'émission et de réception (6, 7) sont disposées sous la forme d'hélices concentriques sur un substrat.

11. Capteur de position selon l'une quelconque des revendications précédentes, **caractérisé en ce que** la largeur de la bobine de réception (6) et de la bobine d'émission (7) est comprise entre 20 et 30 µm.
